# EUROPEAN PATENT SPECIFICATION

(11) **EP 2 090 152 B1**
(45) Date of publication and mention of the grant of the patent: **01.02.2012**
(21) Application number: 09075070.4
(22) Date of filing: 11.02.2009
(51) Int. Cl.: A01D 78/12

(54) **Raking device**
Rechenvorrichtung
Dispositif de râtelage

(30) Priority: 15.02.2008 NL 1035030
(43) Date of publication of application: 19.08.2009
(73) Proprietor: Lely Patent N.V., 3147 PA Maassluis (NL)
(72) Inventor: van den Engel, Alfonsus Jacobus, 3147 PA Maassluis (NL)
(74) Representative: Corten, Maurice Jean F.M.

(56) References cited:
- DE-A1- 1 910 280
- DE-A1- 2 403 694
- FR-A- 2 098 567
- NL-A- 6 709 476
- NL-A- 7 005 414

## Description

### BACKGROUND OF THE INVENTION

The invention relates to a raking device for raking mowed plants lying on the ground, such as grass, in particular in the form of a swathe according to the preamble of claim 1.

Raking devices of this kind, also referred to as swathe rakes, are known in many different designs such as from the Dutch patent application 6709476. In general, they comprise a frame which is to be coupled to a tractor and on which one or more so-called rake wheels are arranged. Each rake wheel comprises a rotor with a vertical axis of rotation, to which a number of radial or combined radial/tangential arms are attached. The ends of the arms are provided with a group of rake teeth which can be turned on the arm between a working or raking position which extends as far as the plane close to the ground and a turned-up inoperative position, in which the rake teeth extend virtually horizontally. The path in the operating position is situated in such a position with respect to the direction of travel that the plants are displaced in a lateral direction to form a ridge or swathe. If several rake wheels are arranged on the frame, they may rotate in the same direction in order together to form a central swathe or, by contrast, to form several lateral swathes.

In order to turn the groups of rake teeth between the inoperative position and the operating position, they are connected to a pivot arm which is pivotably attached to the inner end of each arm and which forms a single rotatable unit with the group of rake teeth. In order to turn the pivot arm, the latter is provided with a roller which travels along a stationary cam track. The stationary cam track comprises an inoperative section and an operating section which, like the orbit path of the arms, are situated in planes at right angles to the axis of rotation of the rotor. However, both sections are in different planes and are connected to one another by two transition sections. In the one transition section, the roller is displaced in such a manner that the pivot arm turns the rake teeth into the operating position and in the other transition section, the roller is displaced in such a manner that a backward rotation of the rake teeth takes place.

When the rake teeth have been brought into the operating position, they will grip mowed plants spread on the ground and carry them along. The number of plants which accumulate in front of the teeth during one turn increases in this case, as a result of which the resistance which the rake teeth experience will increase. As a result, the rake teeth will tend to bend backwards.

If the rake teeth are vertical at the start of the operating section or are attached to the arm in such a manner that the bottom end of the teeth is situated below or behind the arm, the distance of the teeth ends to the ground will increase due to the bending, resulting in a gap and to plants remaining behind on the ground. In order to rake all the plants into a swathe, the operating speed will have to be lowered or an additional operating turn has to be carried out.

If the bottom portion of the rake teeth, in a manner known per se, always extends obliquely forwards and their bottom end is situated in front of the arm, said bending will lead to the ends of the teeth coming closer to the ground and being able to dig into the latter, as a result of which the resistance experienced during raking becomes unacceptably large.

### SUMMARY OF THE INVENTION

It is an object of the invention to provide a raking device of the type mentioned in the preamble by means of which the efficiency when passing through the operating section can be maintained as much as possible.

It is an object of the invention to provide a raking device of the type mentioned in the preamble by means of which the number of plants which are spilled when the end portion of the operating section is passed through is limited.

In one aspect, the invention provides a raking device for mowed plants lying on the ground, comprising a stator and a rotor with a substantially vertical rotor axis, in which the rotor is provided with a number of arms which extend outwards therefrom with a radial directional component and which are provided at their outer end with rake teeth and are provided at their inner end with rotation means for rotating the rake teeth about the centre axis of the respective arm during a rotation of the rotor between an inoperative position which is to be assumed in an inoperative section of the rotation and in which the rake teeth are situated above the ground in order not to be in raking engagement with the plants, and an operating position which is to be assumed in an operating section of the rotation in which the rake teeth are in raking engagement with the plants on the ground, with the rotation means being designed to rotate the rake teeth forwards while passing through at least a portion of the operating section.

By the addition of a forward rotation compared to the customary constant orientation of the rake teeth with respect to the axis of rotation of the rotor, the abovementioned increased bending is compensated for, so that a good action of the rake teeth during a rotation can be maintained.

It should be noted that raking devices are known in which the cam track can be adjusted vertically prior to raking, so that the orientation of the teeth, in particular the advance angle, can be adjusted beforehand, but in this case the orientation of the teeth in the entire operating section remains constant.

The inoperative section may be of conventional design, that is to say that the teeth do not change their rotation position with respect to the arm axis.

The rotation means may be designed to rotate the rake teeth forwards while passing through a portion of the operating section which comprises the end portion and/or start portion of the operating section.

The rotation means may be designed to turn the rake teeth forwards while passing through a portion of the operating section which is at a distance from the end and/or the start of the operating section.

The rotation means may be designed to rotate the rake teeth forwards while passing through a portion of the operating section which comprises more than half of the operating section.

The rotation means may be designed to rotate the rake teeth forwards while passing through a portion of the operating section which is largely situated in the second half of the operating section.

In one embodiment, the rotation means are designed to continuously rotate the rake teeth while passing through said part of the operating section. The rotation-may be permanent, that is to say with an angle which increases linearly. In another embodiment, the rotation is variable, for example according to a function having a flowing curve.

In a further development of the raking device according to the invention, the rotation means comprise a pivot arm on the respective arm, which is provided with a running part, in particular a travelling roller, in which the pivot arm and the rake teeth together form an assembly which can rotate about the axis of the respective arm, in which rotation means furthermore comprise a cam track on the stator for controlled guiding of the running parts on the pivot arms in order to achieve the rotation. Such a construction is in principle similar to the known raking devices mentioned above.

According to the invention, it is possible in this case for the cam track to comprise an inoperative section which, via a first transition section, follows an operating section of the cam track in the direction of rotation of the rotor, in which the first transition section is at an angle opening in the direction of rotation of the rotor to a plane at right angles to the rotor axis, in which the operating section of the cam track comprises a first portion, in which the first portion is at at least one first angle opening in the direction of rotation of the rotor to a plane at right angles to the rotor axis, the sign of which is opposite to that of the first transition section. This makes it simple to apply the invention from the point of view of construction, if desired also on existing raking devices by replacing the cam track thereof by a cam track according to the invention.

The inoperative section may, in the usual manner, extend in a plane which is at right angles to the rotor axis.

The abovementioned portion of the operating section of the rotation of the rotor is then formed by said first portion of the operating section of the cam track, both portions are functionally one and the same.

In this case, the first portion of the operating section of the cam track may thus comprise the end and/or the start of the operating section of the cam track, or may adjoin the first transition section indirectly in the direction of rotation of the rotor, for example upstream of an end section situated in a plane at right angles to the rotor axis.

The operating section may, via a second transition section, follow the inoperative section in the direction of rotation of the rotor.

The first portion of the operating section of the cam track may extend along the entire operating section. Alternatively, the first portion of the operating section of the cam track is preceded by or followed by a second portion of the operating section of the cam track which runs parallel to said plane at right angles to the rotor axis.

In one embodiment, in which the running part trails behind the respective arm in the direction of rotation, the first angle may have a negative sign.

The cam track may be formed in a manner known per se such that the axes of the travelling rollers are at a constant angle to the rotor axis, viewed in projection on a plane which contains the travelling roller axis and runs parallel to the rotor axis, with the travelling roller axis preferably intersecting the rotor axis and preferably being at an angle of approximately 90 degrees thereto.

According to a further aspect but not according to the invention, there is provided a raking device for cut plants, comprising a stator and a rotor with a substantially vertical rotor axis, in which the rotor is provided with a number of arms which extend outwards therefrom with a radial directional component and which are provided at their outer end with rake teeth and are provided at their inner end with a pivot arm with a running part, in particular a travelling roller, in which the pivot arm and the rake teeth together form an assembly which can rotate about the axis of the respective arm, in which the stator is provided with a cam track for controlled guiding of the running parts on the pivot arms so that, during a rotation of the arms, the rake teeth are in an inoperative position in an inoperative section of the rotation and are in an operating position in an operating section of the rotation, in which the inoperative section, via a first transition section, follows the operating section in the direction of rotation of the rotor, in which the first transition section is at an angle opening in the direction of rotation of the rotor to a plane at right angles to the rotor axis, in which the operating section of the cam track comprises a portion which is at a first angle opening in the direction of rotation of the rotor to a plane at right angles to the rotor axis, the sign of which is opposite to that of the first transition section.

The operating section may, via a second transition section in the direction of rotation of the rotor, follow the inoperative section, with the sign of the first angle being identical to that of the second transition section

In a further aspect, but not according to the invention, there is provided a raking device for cut plants, comprising a stator and a rotor with a substantially vertical rotor axis, in which the rotor is provided with a number of arms which extend outwards therefrom with a radial directional component and which are provided at their outer end with rake teeth and are provided at their inner end with a pivot arm with a running part, in which the pivot arm and the rake teeth together form an assembly which can rotate about the axis of the respective arm, in which the stator is provided with a cam track for controlled guiding of the running parts on the pivot arms so that, during a rotation of the arms, the rake teeth are in an inoperative position in an inoperative section of the rotation and are in an operating position in an operating section of the rotation, in which at least a first portion of the operating section of the cam track is inclined with respect to the orbit path of the arms.

In one embodiment, the first portion descends with respect to the orbit path of the arms.

In an alternative embodiment, the first portion ascends with respect to the orbit path of the

In a further aspect, but not according to the invention, there is provided a cam track which is clearly suitable and intended for use in a raking device according to the invention.

In a further aspect but not according to the invention, there is provided an assembly of a mobile frame comprising one or more raking devices according to the invention.

The aspects and measures described in this description and claims of the application and/or illustrated in the drawings of this application can, where possible, also be applied separately from one another. Said separate aspects may be the subject of divisional patent applications to this effect. This applies in particular to the measures and aspects which have been described as such in the subclaims.

### SHORT DESCRIPTION OF THE FIGURES

The invention will be explained with reference to an exemplary embodiment illustrated in the attached drawings, in which:
Figure 1 shows a diagrammatic side view of a swathe raking machine provided with a raking device according to the invention;
Figure 2 shows a cross section through a central part of a raking device according to the invention;
Figures 3 and 3A show an outline of a cam track for a raking device according to the invention and a detail thereof, respectively; and
Figure 4 shows a diagrammatic illustration of an effect of a cam track of Figure 3 in a raking device according to the invention.

### DETAILED DESCRIPTION OF THE FIGURES

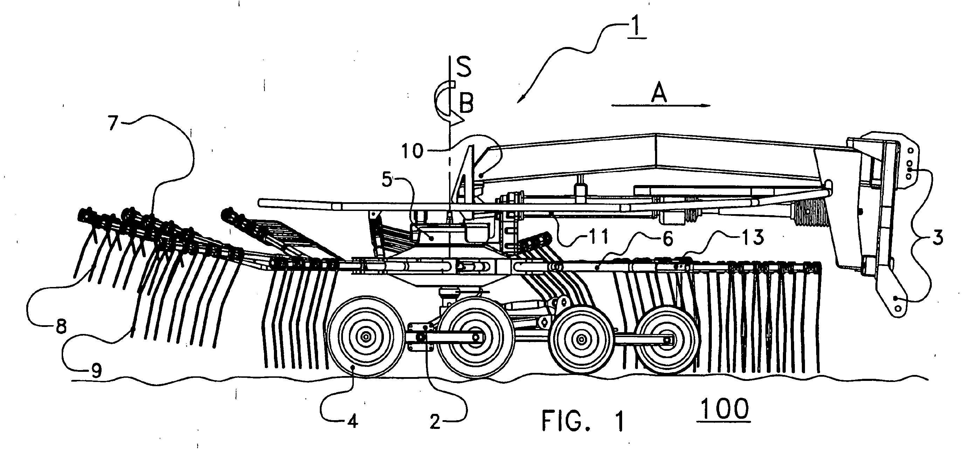

The raking device 1 illustrated in Figure 1 comprises a frame 2 provided with wheels 4 which is provided with a coupling arm 10 with coupling parts 3 for coupling to a tractor (not shown in any further detail) which can pull the raking device 1 (direction A) across ground 100 and can drive the horizontal drive shaft 11 thereof using a power take-off.

The drive shaft 11 is intended for driving, via a right-angled transmission (not shown in any further detail), a rotor 5 which is rotatable about rotor axis S in direction B and on which a number of raking arms 6 are carried. At their radial outer ends 7, the raking arms 6 are provided with raking pins 8, which can rake up plants which have been cut and are spread on the ground 100 with their bottom ends 9.

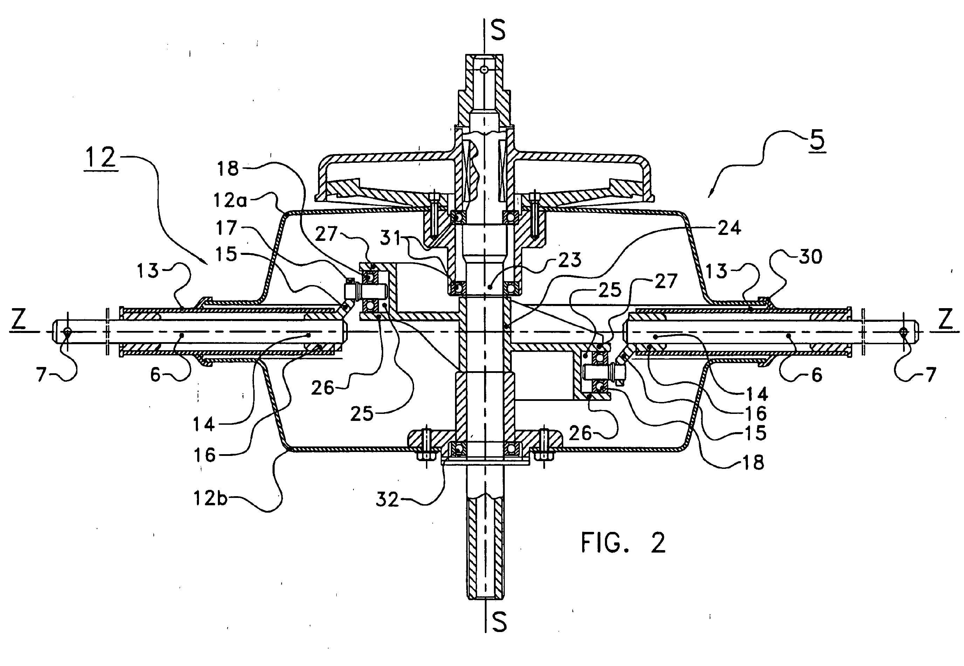

Figure 2 shows the rotor arrangement 5 in more detail. The rotor housing 12 comprises a top cover 12a and a bottom cover 12b, which hold a supporting collar 30 between them, which supports the raking arms 6 so that they can co-rotate with the rotor housing 12 while maintaining their radial and/or tangential orientation. The raking arms 6 comprise a fixed sleeve 13, which is fixedly secured in the supporting collar 30. In the sleeves 13, arm rods 14 are mounted which can rotate about their axis and which, at their radial outer ends, are provided with raking pins 8 and, at their radial inner ends, are provided with operating arms 15 which are non-rotatably attached thereto by clamping rings 16 and which are trailing, viewed in the direction of rotation, with respect to the respective arm rod 14. At their free ends 17, the operating arms 15 are provided with rollers 18, the axes of which are in this case radially directed, at right angles to the rotor axis. The raking arms 6 are situated in and co-rotate with the rotor 5 in the direction of rotation in a plane Z, which is at right angles to the rotor axis S.

The rotor 5 surrounds a stator shaft 23, which is non-rotatably attached to the frame 2 and supports bearings 31 and 32 for the rotor 5. Between the bearings 31, 32, the stator shaft 23 furthermore non-rotatably supports a cam track body 24, on which a cam track 25, delimited by bottom guide 26 and top guide 27, is provided for guiding the rollers 18.

As is illustrated in Figure 2, the course of the cam track 25 varies in the peripheral direction thereof, as a result of which the vertical position of the rollers 18 varies during rotation. As a result thereof, a torsional force is exerted on the arm rods 14 via the operating arms 15, leading to a pivoting of the rake teeth 8 (directions C). The cam track 25 is here designed such that the rake teeth 8 are pivoted upwards to the rear in an inoperative section of the rotation so as to remain out of engagement with the plants and are pivoted forwards in an operating section of the rotation, into a substantially upright position, in order to move the plants situated on the ground 100 in the desired direction and form a swathe.

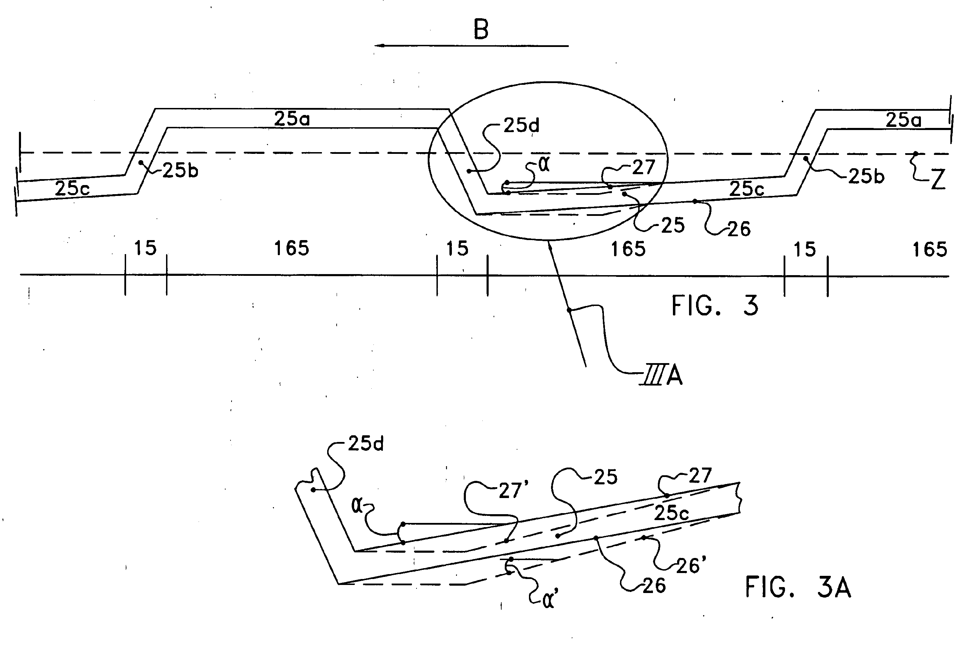

An outline of the cam track 25 is shown in Figure 3, in which the inoperative section 25a extends horizontally, that is to say is situated in a plane at right angles to the rotor axis S and parallel to plane Z, and the operating section 25c extends at a constant, negative angle α of, for example, 3 degrees with respect to said plane and plane Z. Via ascending transition section 25d, the operating section 25c passes into inoperative section 25a, which at its end passes into the operating section 25c via descending transition section 25b. The inoperative section 25a and the operating section 25c can each extend over 165 degrees, and the transition sections 25b and 25d in that case each over 15 degrees.

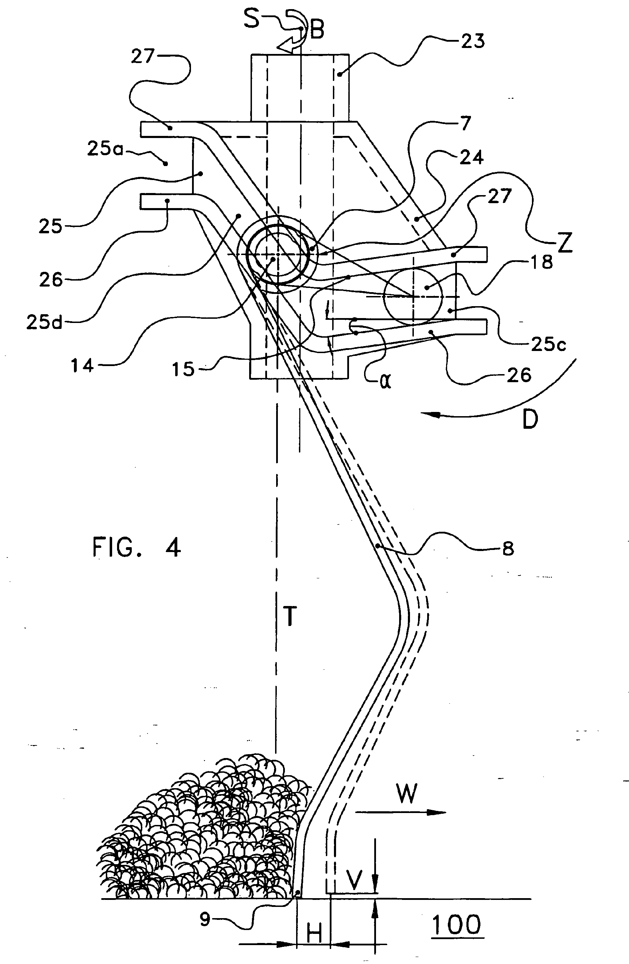

Figure 4 shows the passage through an end portion of the operating section 25c, in which the roller 18 is still in a downward track, while the arm rod 14 maintains its vertical position along the rotor axis S, in plane Z. As a result of the descending track 25c, the operating arm 15 will be pivoted increasingly further in the direction D, thus rotating the arm rod 14 and thereby pivoting the rake teeth 8 forwards, while passing through the operating section. Compared to a track extending parallel to the plane Z, the ends 9 of the rake teeth 8 (viewed in an unloaded state, i.e. without any plants) will then have been moved forwards, indicated in the illustration by distance H. This compensates for the backward movement of these ends which would result from the bending of the teeth 8 due to the increasing resistance W of the plants on the ground. Otherwise, the gap V between the ground 100 and the tooth ends 9 which are situated behind the axial plane T through the end of the arm rod 14 would become too large, resulting in spillage:

It should be noted that the acute angle of track 25c can also vary, for example when said track is bent. The track 25c can thus comprise a (short) part which runs parallel to plane Z, in particular at the end of the operating section, in order to make the transition to the transition section 25d less sharp, see dashed lines 26' and 27' in the detail in Figure 3A, in which the angle α' of the sloping track with plane Z is slightly larger.

The above description is given in order to illustrate the operation of preferred embodiments of the invention and not in order to limit the scope of the invention. On the basis of the above explanation, many variations which fall within the scope of the present invention as defined by the following claims will be obvious to a person skilled in the art.

## Claims

1. Raking device (1) for mowed plants lying on the ground (100), comprising a stator (23) and a rotor (5) with a substantially vertical rotor axis, in which the rotor is provided with a number of arms (6) which extend outwards therefrom with a radial directional component and which are provided at their outer end with rake teeth (8) and are provided at their inner end with rotation means (14-18, 25) for rotating the rake teeth (8) about the centre axis of the respective arm (6) during a rotation of the rotor (5) between an inoperative position which is to be assumed in an inoperative section (25a) of the rotation and in which the rake teeth (8) are situated above the ground (100) in order not to be in raking engagement with the plants, and an operating position which is to be assumed in an operating section (25c) of the rotation in which the rake teeth (8) are in raking engagement with the plants on the ground (100), **characterized by** the rotation means being designed to rotate the rake teeth forwards while passing through at least a portion of the operating section (25c).

2. Raking device (1) according to Claim 1, in which the rotation means are designed to rotate the rake teeth (8) forwards while passing through a portion of the operating section (25c) which comprises the end portion and/or start portion of the operating section (25c).

3. Raking device (1) according to Claim 1, in which the rotation means are designed to rotate the rake teeth (8) forwards while passing through a portion of the operating section (25c) which adjoins the end and/or start of the operating section (25c).

4. Raking device (1) according to Claim 1, 2 or 3, in which the rotation means are designed to rotate the rake teeth (8) forwards while passing through a portion of the operating section (25c) which comprises more than half of the operating section.

5. Raking device (1) according to one of the preceding claims, in which the rotation means are designed to rotate the rake teeth (8) forwards while passing through a portion of the operating section (25c) which is largely situated in the second half of the operating section (25c).

6. Raking device (1) according to one of the preceding claims, in which the rotation means are designed to continuously rotate the rake teeth (8) while passing through said part of the operating section (25c).

7. Raking device (1) according to Claim 6, in which the continuous rotation is permanent.

8. Raking device (1) according to Claim 6, in which the continuous rotation is variable, for example according to a function having a flowing curve.

9. Raking device (1) according to one of the preceding claims, in which the rotation means comprise a pivot arm (15) on the respective arm (6), which is provided with a running part (18), in particular a travelling roller, in which the pivot arm (15) and the rake teeth (8) together form an assembly which can rotate about the axis of the respective arm (6), in which rotation means furthermore comprise a cam track (25) on the stator for controlled guiding of the running parts on the pivot arms (15) in order to achieve the rotation.

10. Raking device (1) according to Claim 9, in which the cam track comprises an inoperative section (25a) which, via a first transition section (25d), follows an operating section (25c) of the cam track in the direction of rotation of the rotor, in which the first transition section (25d) is at an angle opening in the direction of rotation of the rotor to a plane at right angles to the rotor axis, in which the operating section (25c) of the cam track comprises a first portion, in which the first portion is at one first angle opening in the direction of rotation of the rotor to a plane at right angles to the rotor axis, the sign of which is opposite to that of the first transition section.

11. Raking device (1) according to Claim 10, in which the first portion of the operating section (25c) of the cam track comprises at least a part of the end of the operating section (25c) of the cam track.

12. Raking device (1) according to Claim 11, in which the first portion of the operating section (25c) of the cam track adjoins the first transition section (25d) indirectly in the direction of rotation of the rotor, for example by an end section situated in a plane at right angles to the rotor axis.

13. Raking device (1) according to Claim 11, in which the first portion of the operating section (25c) of the cam track adjoins the first transition section (25d) directly in the direction of rotation of the rotor.

14. Raking device (1) according to one of Claims 10-13, in which the operating section (25c), via a second transition section (25b), follows the inoperative section (25a) in the direction of rotation of the rotor, in which the first portion of the operating section of the cam track comprises the start of the operating section (25c).

15. Raking device (1) according to one of Claims 10-14, in which the first portion of the operating section (25c) of the cam track extends over the entire or virtually the entire operating section (25c).

16. Raking device (1) according to one of Claims 10-14, in which the first portion of the operating section (25c) of the cam track is preceded by or followed by a second portion of the operating section (25c) of the cam track which runs parallel to said plane at right angles to the rotor axis.

17. Raking device (1) according to one of Claims 10-16, in which the running part trails behind the respective arm (6) in the direction of rotation and the first angle has a negative sign.

## Patentansprüche

1. Rechenvorrichtung (1) für gemähte, auf dem Boden (100) liegende Pflanzen, umfassend einen Stator (23) und einen Rotor (5) mit einer im Wesentlichen vertikalen Rotorachse, in welcher der Rotor mit einer Anzahl von Armen (6) versehen ist, die sich nach außen von diesem aus mit einer radialen Richtungskomponente erstrecken und welche an ihrem äußeren Ende mit Rechenzähnen (8) ausgestattet sind und an ihrem inneren Ende mit Rotationsmitteln (14-18, 25) zum Drehen der Rechenzähne (8) um die Mittelachse des jeweiligen Arms (6) während einer Umdrehung des Rotors (5) zwischen einer außer Eingriff Stellung, welche in einem außer Eingriff Abschnitt (25a) der Umdrehung eingenommen wird und in welchem die Rechenzähne (8) über dem Boden (100) befindlich sind, um nicht in rechendem Eingriff mit den Pflanzen zu sein, und einer Eingriffsstellung, welche in einem Eingriffsabschnitt (25c) der Umdrehung eingenommen wird, in dem die Rechenzähne (8) sich in rechendem Eingriff mit den Pflanzen auf dem Boden (100) befinden, **dadurch gekennzeichnet, dass** die Rotationsmittel so ausgelegt sind, um die Rechenzähne nach vorne zu drehen, während sie wenigstens einen Teil des Eingriffsabschnitts (25c) durchlaufen.

2. Rechenvorrichtung (1) nach Anspruch 1,
wobei die Rotationsmittel so ausgelegt sind, um die Rechenzähne (8) nach vorne zu drehen, während sie einen Teilbereich des Eingriffsabschnitts (25c) durchlaufen, welcher den Endabschnitt und/oder den Anfangsabschnitt des Eingriffsabschnitts (25c) umfasst.

3. Rechenvorrichtung (1) nach Anspruch 1,
wobei die Rotationsmittel so ausgelegt sind, um die Rechenzähne (8) nach vorne zu drehen, während sie einen Teilbereich des Eingriffsabschnitts (25c) durchlaufen, welcher benachbart dem Ende und/oder dem Beginn des Eingriffsabschnitts (25c) ist.

4. Rechenvorrichtung (1) nach Anspruch 1, 2 oder 3,
wobei die Rotationsmittel so ausgelegt sind, um die Rechenzähne (8) nach vorne zu drehen, während sie einen Teilbereich des Eingriffsabschnitts (25c) durchlaufen, welcher mehr als die Hälfte des Eingriffsabschnitts umfasst.

5. Rechenvorrichtung (1) nach einem der vorhergehenden Ansprüche,
wobei die Rotationsmittel so ausgelegt sind, um die Rechenzähne (8) nach vorne zu drehen, während sie einen Teilbereich des Eingriffsabschnitts (25c) durchlaufen, welcher im Wesentlichen in der zweiten Hälfte des Eingriffsabschnitts (25c) angeordnet ist.

6. Rechenvorrichtung (1) nach einem der vorhergehenden Ansprüche,
wobei die Rotationsmittel so ausgelegt sind, um die Rechenzähne (8) fortgesetzt zu drehen, während sie den Teilbereich des Eingriffsabschnitts (25c) durchlaufen.

7. Rechenvorrichtung (1) nach Anspruch 6,
wobei die fortgesetzte Rotation dauerhaft ist.

8. Rechenvorrichtung (1) nach Anspruch 6,
wobei die fortgesetzte Rotation veränderlich ist, zum Beispiel nach einer Funktion, welche eine fließende Kurve aufweist.

9. Rechenvorrichtung (1) nach einem der vorhergehenden Ansprüche,
wobei die Rotationsmittel einen Schwenkarm (15) auf dem jeweiligen Arm (6) umfassen, welcher mit einem laufenden Teil (18), insbesondere einer Mitnehmerrolle, ausgestattet ist, wobei der Schwenkarm (15) und die Rechenzähne (8) gemeinsam eine Baueinheit bilden, welche sich um die Achse des jeweiligen Arms (6) drehen kann, wobei die Rotationsmittel des Weiteren eine Nockenspur (25) auf dem Stator zur gesteuerten Führung der laufenden Teile auf den Schwenkarmen (15) umfassen, um die Rotation zu erzielen.

10. Rechenvorrichtung (1) nach Anspruch 9,
wobei die Nockenspur einen außer Eingriff Abschnitt (25a) umfasst, welcher über einen ersten Übergangsabschnitt (25d) einem Eingriffsabschnitt (25c) der Nockenspur in der Richtung der Drehung des Rotors folgt, wobei der erste Übergangsabschnitt (25d) an einem Winkel ist, der in Rotationsrichtung des Rotors zu einer Ebene in rechten Winkeln zur Rotorachse öffnet, in welcher der Eingriffsabschnitt (25c) der Nockenspur einen ersten Teilbereich umfasst, wobei der erste Teilbereich in wenigstens einem ersten Winkel ist, welcher in die Rotationsrichtung des Rotors zu einer Ebene in rechten Winkeln zur Rotorachse öffnet, dessen Vorzeichen entgegengesetzt jenem des ersten Übergangsabschnitts ist.

11. Rechenvorrichtung (1) nach Anspruch 10,
wobei der erste Teilbereich des Eingriffsabschnitts (25c) der Nockenspur wenigstens einen Teil des Endes des Eingriffsabschnitts (25c) der Nockenspur umfasst.

12. Rechenvorrichtung (1) nach Anspruch 11,
wobei der erste Teilbereich des Eingriffsabschnitts (25c) der Nockenspur sich an den ersten Übergangsabschnitt (25d) indirekt in Rotationsrichtung des Rotors anfügt, zum Beispiel durch einen in einer Ebene in rechten Winkeln zur Rotorachse liegenden Endabschnitt.

13. Rechenvorrichtung (1) nach Anspruch 11,
wobei der erste Teilbereich des Eingriffsabschnitts (25c) der Nockenspur sich an den ersten Übergangsabschnitt (25d) direkt in der Rotationsrichtung des Rotors anfügt.

14. Rechenvorrichtung (1) nach einem der Ansprüche 10 bis 13,
wobei der Eingriffsabschnitt (25c) über einen zweiten Übergangsabschnitt (25b) dem außer Eingriff Abschnitt (25a) in der Rotationsrichtung des Rotors folgt, wobei der erste Teilbereich des Eingriffsabschnitts der Nockenspur den Beginn des Eingriffsabschnitts (25c) umfasst.

15. Rechenvorrichtung (1) nach einem der Ansprüche 10 bis 14,
wobei der erste Teilbereich des Eingriffsabschnitts (25c) der Nockenspur sich über den gesamten oder praktisch den gesamten Eingriffsabschnitt (25c) erstreckt.

16. Rechenvorrichtung (1) nach einem der Ansprüche 10 bis 14,
wobei dem ersten Teilbereich des Eingriffsabschnitts (25c) der Nockenspur ein zweiter Teilbereich des Eingriffsabschnitts (25c) der Nockenspur voran- oder nachgestellt ist, welcher parallel zu dieser Ebene in rechten Winkeln zur Rotorachse verläuft.

17. Rechenvorrichtung (1) nach einem der Ansprüche 10 bis 16,
wobei der laufende Teil hinter dem jeweiligen Arm (6) in der Rotationsrichtung nachfolgt und der erste Winkel ein negatives Vorzeichen aufweist.

## Revendications

1. Dispositif de ratissage (1) pour des plantes fauchées se trouvant au sol (100), comprenant un stator (23) et un rotor (5) avec un axe de rotor sensiblement vertical, dans lequel le rotor est pourvu d'un certain nombre de bras (6) qui s'étendent du rotor vers l'extérieur avec un composant directionnel radial, et qui sont pourvus d'une denture de râteau (8) à leur extrémité externe et de moyens de rotation (14 à 18, 25)à leur extrémité interne permettant de faire tourner la denture de râteau (8) autour de l'axe central du bras (6) respectif pendant une rotation du rotor (5) entre une position de non-fonctionnement qui doit être adoptée dans une section de non-fonctionnement (25a) de la rotation et dans laquelle la denture de râteau (8) est située au-dessus du sol (100) de façon à ne pas être en prise de ratissage avec les plantes, et une position de fonctionnement qui doit être adoptée dans une section de fonctionnement (25c) de la rotation dans laquelle la denture de râteau (8) est en prise de ratissage avec les plantes au sol (100), **caractérisé en ce que** les moyens de rotation sont conçus pour faire tourner la denture de râteau vers l'avant lors d'un passage à travers au moins une portion de la section de fonctionnement (25c).

2. Dispositif de ratissage (1) selon la revendication 1, dans lequel les moyens de rotation sont conçus pour faire tourner la denture de râteau (8) vers l'avant lors d'un passage à travers une portion de la section de fonctionnement (25c) qui comprend la portion de fin et/ou la portion de début de la section de fonctionnement (25c).

3. Dispositif de ratissage (1) selon la revendication 1, dans lequel les moyens de rotation sont conçus pour faire tourner la denture de râteau (8) vers l'avant lors d'un passage à travers une portion de la section de fonctionnement (25c) qui est contigüe à la fin et/ou au début de la section de fonctionnement (25c).

4. Dispositif de ratissage (1) selon la revendication 1, 2 ou 3, dans lequel les moyens de rotation sont conçus pour faire tourner la denture de râteau (8) vers l'avant lors d'un passage à travers une portion de la section de fonctionnement (25c) qui comprend plus de la moitié de la section de fonctionnement.

5. Dispositif de ratissage (1) selon l'une des revendications précédentes, dans lequel les moyens de rotation sont conçus pour faire tourner la denture de râteau (8) vers l'avant lors d'un passage à travers une portion de la section de fonctionnement (25c) qui est en grande partie située dans la seconde moitié de la section de fonctionnement (25c).

6. Dispositif de ratissage (1) selon l'une des revendications précédentes, dans lequel les moyens de rotation sont conçus pour faire tourner en continu la denture de râteau (8) lors d'un passage à travers ladite partie de la section de fonctionnement (25c).

7. Dispositif de ratissage (1) selon la revendication 6, dans lequel la rotation continue est permanente.

8. Dispositif de ratissage (1) selon la revendication 6, dans lequel la rotation continue est variable, par exemple selon une fonction ayant une courbe d'écoulement.

9. Dispositif de ratissage (1) selon l'une des revendications précédentes, dans lequel les moyens de rotation comprennent un bras de pivot (15) sur le bras (6) respectif, qui est pourvu d'une pièce mobile (18), en particulier un galet d'entraînement, dans lequel le bras de pivot (15) et la denture de râteau (8) forment conjointement un ensemble qui peut tourner autour de l'axe du bras (6) respectif, dans lequel les moyens de rotation comprennent en outre une rampe de guidage (25) sur le stator pour un guidage commandé des pièces mobiles sur les bras de pivot (15) afin de réaliser la rotation.

10. Dispositif de ratissage (1) selon la revendication 9, dans lequel la rampe de guidage comprend une section de non-fonctionnement (25a) qui, via une première section de transition (25d), suit une section de fonctionnement (25c) de la rampe de guidage dans le sens de rotation du rotor, dans lequel la première section de transition (25d) est à un angle s'ouvrant dans le sens de rotation du rotor sur un plan à angle droit avec l'axe de rotor, dans lequel la section de fonctionnement (25c) de la rampe de guide comprend une première portion, dans lequel la première portion est à un premier angle s'ouvrant dans le sens de rotation du rotor sur un plan à angle droit avec l'axe de rotor, dont le signe est opposé à celui de la première section de transition.

11. Dispositif de ratissage (1) selon la revendication 10, dans lequel la première portion de la section de fonctionnement (25c) de la rampe de guidage comprend au moins une partie de la fin de la section de fonctionnement (25c) de la rampe de guidage.

12. Dispositif de ratissage (1) selon la revendication 11, dans lequel la première portion de la section de fonctionnement (25c) de la rampe de guidage est contigüe à la première section de transition (25d) indirectement dans le sens de rotation du rotor, par exemple par une section de fin située dans un plan à angle droit avec l'axe de rotor.

13. Dispositif de ratissage (1) selon la revendication 11, dans lequel la première portion de la section de fonctionnement (25c) de la rampe de guidage est contigüe à la première section de transition (25d) directement dans le sens de rotation du rotor.

14. Dispositif de ratissage (1) selon l'une des revendications 10 à 13, dans lequel la section de fonctionnement (25c), via une seconde section de transition (25b), suit la section de non-fonctionnement (25a) dans le sens de rotation du rotor, dans lequel la première portion de la section de fonctionnement de la rampe de guidage comprend le début de la section de fonctionnement (25c).

15. Dispositif de ratissage (1) selon l'une des revendications 10 à 14, dans lequel la première portion de la section de fonctionnement (25c) de la rampe de guidage s'étend sur la totalité ou la presque totalité de la section de fonctionnement (25c).

16. Dispositif de ratissage (1) selon l'une des revendications 10 à 14, dans lequel la première portion de la section de fonctionnement (25c) de la rampe de guidage est précédée de ou suivie par une seconde portion de la section de fonctionnement (25c) de la rampe de guidage qui est parallèle audit plan à angle droit avec l'axe de rotor.

17. Dispositif de ratissage (1) selon l'une des revendications 10 à 16, dans lequel la pièce mobile traîne derrière le bras (6) respectif dans le sens de rotation et le premier angle a un signe négatif.
